# EUROPÄISCHE PATENTSCHRIFT

(11) **EP 1 572 372 B1**
(45) Veröffentlichungstag und Bekanntmachung des Hinweises auf die Patenterteilung: **22.11.2006**
(21) Anmeldenummer: 03782404.2
(22) Anmeldetag: 15.12.2003
(51) Int. Cl.: B05B 7/06, B60S 1/52

(54) **WASCHDÜSE ZUM AUSBRINGEN EINES FLÜSSIGEN REINIGUNGS- ODER WASCHMEDIUMS**
WASHING NOZZLE FOR DISCHARGING A LIQUID CLEANING OR WASHING MEDIUM
BUSE DE LAVAGE POUR PRODUIRE UN JET DE LIQUIDE DE NETTOYAGE OU DE LAVAGE

(30) Priorität: 19.12.2002 DE 10259563
(43) Veröffentlichungstag der Anmeldung: 14.09.2005
(73) Patentinhaber: VALEO SYSTEMES D'ESSUYAGE, 78321 La Verrière (FR)
(72) Erfinder: EISELE, Simone, 74379 Ingersheim (DE); LASEBNICK, Uwe, 71254 Ditzingen (DE)
(74) Vertreter: Jahn, Wolf-Diethart
(86) Internationale Anmeldenummer: PCT/EP2003/014240
(87) Internationale Veröffentlichungsnummer: WO 2004/056489

(56) Entgegenhaltungen:
- EP-A- 0 225 624
- WO-A-02/072274
- FR-A- 2 342 103
- US-A- 4 802 630
- US-A1- 2002 134 862
- US-B1- 6 412 708

## Beschreibung

Die Erfindung bezieht sich auf eine Waschdüse gemäß Oberbegriff Patentanspruch 1 oder 9 und dabei speziell auf eine Waschdüse zur Verwendung bei Wasch- oder Reinigungsanlagen an Fahrzeugen zum Reinigen von Fahrzeugscheiben, insbesondere Front- oder Windschutzscheiben, Scheinwerferscheiben, Heckleuchten und/oder Kameras.

Eine Waschdüse im Sinne der Erfindung ist also insbesondere eine Düse zum Ausbringen des flüssigen Reinigungs- oder Waschmedium auf eine zu reinigende Fläche des Fahrzeugs, d.h. z.B. auf Fahrzeugscheiben, insbesondere Front- oder Windschutzscheiben, Scheinwerferscheiben, Heckleuchten und/oder Kameras. Das flüssige Reinigungs- oder Waschmedium ist im Sinne der Erfindung insbesondere Wasser, vorzugsweise solches mit waschaktiven Zusätzen und/oder mit Frostschutzmitteln.

Ein punktförmiger Düsenstrahl ist im Sinne der Erfindung ein Düsenstrahl mit gleichbleibendem oder im wesentlichen gleichbleibendem Querschnitt, d. h. ein nicht divergierender oder nur geringfügig divergierender Düsenstrahl. Ein flacher oder fächerförmiger Düsenstrahl ist im Sinne der Erfindung insbesondere ein Düsenstrahl, der zumindest beim Auftreffen auf die zu reinigende Fläche einen rechteckförmigen Querschnitt aufweist und sich ausgehend von der Waschdüse oder der Düsenöffnung in einer zur Strahlachse senkrecht verlaufenden Achse zunehmend verbreitert.

Waschdüsen zur Verwendung bei Fahrzeugen, insbesondere Straßenfahrzeugen zum Ausbringen eines flüssigen Reinigungs- oder Waschmediums sind in unterschiedlichen Ausführungen bekannt. Bekannt sind beispielsweise Scheibenwaschdüsen
(WO 00/12361) bestehend aus einem Düsenkörper mit einem Anschluß zum Zuführen des Reinigungs- oder Waschmediums und mit einem in einer Ausnehmung des Düsenkörpers angeordneten plattenförmigen Düsen-Chip oder - einsatz, der in der Ausnehmung des Düsenkörpers passend aufgenommen und an einer Oberflächenseite mit mehreren Kanalrinnen versehen ist, die bei im Düsenkörper montiertem Einsatz mit dem Zuführkanal in Verbindung stehende Düsenkanäle mit jeweils einer Düsenöffnung bilden, und zwar zur Erzeugung von mehreren divergierenden Strahlen des flüssigen Reinigungs- oder Waschmediums.

Bekannt sind weiterhin Scheibenwaschdüsen (DE 44 22 590 A1) zur Erzeugung eines fächerförmigen oder flachen Düsenstrahls mit einem Düsenkörper, in welchem ein Zuführungskanal für das flüssige Reinigungs- oder Waschmedium ausgebildet ist, der über eine Verengung in einen sich in Strömungsrichtung in der Breite erweiternden und in einer im wesentlichen schlitzförmigen Düsenöffnung endenden Düsenkanal oder Expansionsraum übergeht.

Bekannt ist weiterhin auch(DE 1 205 404), einen aus einer einzigen Düsenöffnung austretenden, im wesentlichen punktförmigen Düsenstrahl durch ein außerhalb der Waschdüse vorgesehenes Leitblech umzulenken und hierbei auch so umzuformen, daß eine möglichst breite Verteilung des Reinigungsmediums auf der zu reinigenden Fläche, d.h. Windschutzscheibe erfolgt.

Aus der US 6,412,708 B1 ist noch eine Düseneinrichtung bekannt, die insbesondere zur Verwendung in Sanitäranlagen und dabei für Massage- oder Reinigungszwecke vorgesehen ist. Diese Düseneinrichtung umfasst einen Düsenkanal in einem Düsenkörper, mit einer von dem Düsenkanal gebildeten Düsenöffnung für den Austritt eines Düsenstrahls. Dem Düsenkanal wird Wasser zugeführt, und in dem Düsenkanal ist ein Abschnitt mit reduziertem Querschnitt zur Erzeugung eines Hauptstrahls vorgesehen. Ferner münden innerhalb des Düsenkörpers in einem in Strömungsrichtung vor der Düsenöffnung vorgesehenen Raum quer zum Hauptstrahl verlaufende Kanäle, über welche der Hauptstrahl mit je einem Luftstrahl beaufschlagbar ist. Die Beaufschlagung mit den Luftstrahlen kann gesteuert erfolgen, z. B. gleichzeitig oder alternierend.

Bekannte Düsen besitzen grundsätzlich den Nachteil, daß die Strahlform und/oder Strahlart, insbesondere auch die Tropfengröße und deren Geschwindigkeit im austretenden Düsenstrahl für einen optimalen Reinigungs- oder Wischeffekt nicht ausreichen und/oder der Volumenstrom und damit der Verbrauch an flüssigem Reinigungsmedium im Vergleich zum erzielten Effekt zu groß ist.

Aufgabe der Erfindung ist es, eine neuartige, in ihrer Funktion verbesserte Waschdüse aufzuzeigen. Zur Lösung dieser Aufgabe ist eine Waschdüse entsprechend dem Patentanspruch 1 oder 9 ausgebildet.

Bei der erfindungsgemäßen Waschdüse, die in vielerlei Varianten realisiert werden kann, wird innerhalb der Waschdüse an einer Verengung des Düsenkanals oder aber an wenigstens einer Austrittsöffnung eines inneren Düsenkanalabschnitts ein Düsenstrahl erzeugt, der dann anschließend innerhalb der Waschdüse oder in einem dortigen, beispielsweise von einem Abschnitt des Düsenkanals gebildeten Kollisionsraum mit einem Kollisionsstrahl beaufschlagt wird, dessen Strömungsrichtung während dieser Beaufschlagung senkrecht oder quer zur Achsrichtung des Hauptstrahles orientiert ist

Bei einer Ausbildung gemäß Patentanspruch 1 weist die Waschdüse wenigstens zwei Zuführungen für das flüssige Reinigungsmedium auf, und zwar eine Zuführung zur Erzeugung des Hauptstrahles und eine Zuführung zur Erzeugung des Kollisionsstrahles. Bei dieser Ausführung ist es dann möglich, die Waschdüse in wenigstens zwei unterschiedlichen Betriebsarten zu betreiben, und zwar in einem ersten Modus, in dem die Waschdüse wenigstens einen punktförmigen Strahl erzeugt, sowie in einem zweiten Modus, in dem unter Verwendung des Kollisionsstrahles der Hauptstrahl derart modifiziert, d. h. insbesondere durch den Kollisionsstrahl derart "zerstäubt" wird, daß sich ein divergierender Strahl ergibt, d. h. bei entsprechender Ausbildung der Waschdüse, des Düsenkanals sowie der Düsenöffnung ein fächerförmiger Düsenstrahl,

Bei einer Ausbildung gemäß Patentanspruch 9 wird innerhalb der Waschdüse aus dem über einen Anschluß zugeführten flüssigen Reinigungsmedium ein Hauptstrom zur Bildung eines Hauptstrahles und ein Neben- oder Kollisionsstrom zur Bildung des Kollisionsstrahles erzeugt, wobei dann wiederum innerhalb der Waschdüse bzw. innerhalb des Koillisionsraumes der dort bereits vorhandene Hauptstrahl mit dem Kollisionsstrahl beaufschlagt und durch diesen modifiziert wird.

Weiterbildungen der Erfindung sind Gegenstand der Unteransprüche. Die Erfindung wird im Folgenden anhand der Figuren an Ausführungsbeispielen näher erläutert.

Es zeigen:
- Fig. 1: in vereinfachter Darstellung und im Schnitt eine Waschdüse (Multifunktionsdüse) gemäß der Erfindung;
- Fig. 2: in vereinfachter Darstellung und im Schnitt einen Düseneinsatz oder -chip zur Verwendung bei der Waschdüse der Figur 1;
- Fig. 3 und 4: den Düsenchip in Frontansicht sowie in Draufsicht;
- Fig. 5 und 6: jeweils in vereinfachter Darstellung eine Draufsicht auf die Waschdüse der Figur 1 in zwei unterschiedlichen Betriebszuständen;
- Fig. 7: in vereinfachter Teildarstellung und im Schnitt eine weitere mögliche Ausführungsform der erfindungsgemäßen Waschdüse;
- Fig. 8: in schematischer Darstellung die Ausbildung des Flüssigkeits- oder Düsenkanals der Waschdüse der Figur 7;
- Fig. 9 und 10: eine perspektivische Darstellung sowie eine Draufsicht auf das Unterteil der zweiteiligen Waschdüse der Figur 7, bei abgenommenem Düsenoberteil;
- Fig. 11 und 12: in perspektivischer Darstellung sowie in Unteransicht das Düsenoberteil der Waschdüse der Figur 7 in einer gegenüber dem Einbauzustand gewendeten Ansicht;
- Fig. 13 und 14: Darstellungen ähnlich den Figuren 7 und 8 bei einer weiteren möglichen Ausführungsform;

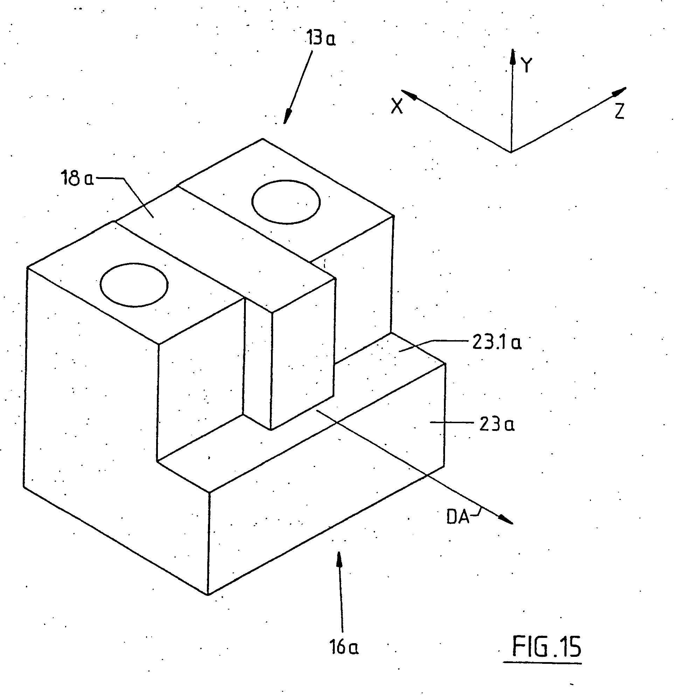

- Fig. 15: eine vereinfachte perspektivische Darstellung der Waschdüse der Figuren 13 und 14.

Zur einfacheren Erläuterung sind in den Figuren jeweils die drei senkrecht zueinander orientierten Raumachsen, nämlich die X-Achse, Y-Achse und Z-Achse eingefügt, wobei die X-Achse mit der Düsenachse DA zusammenfällt.

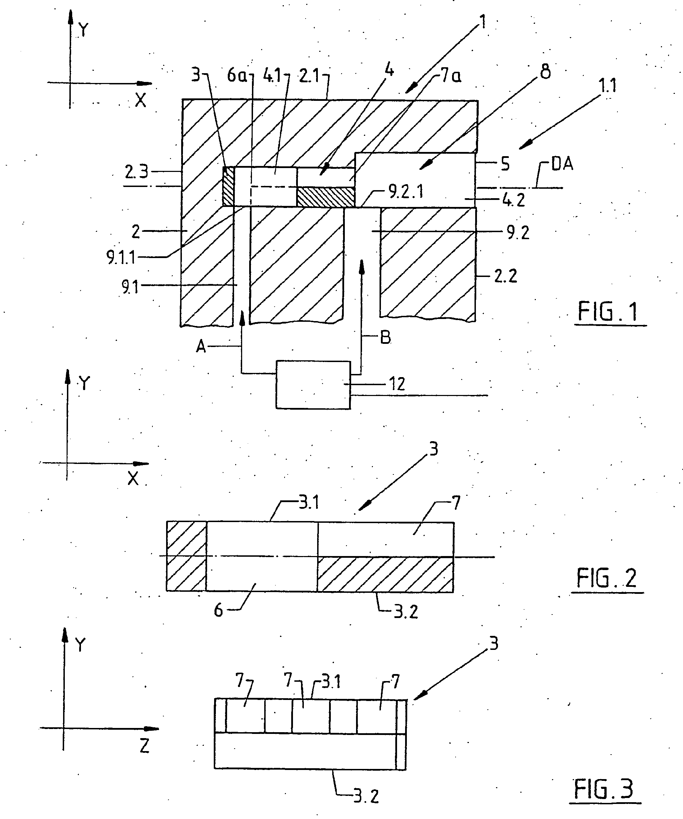

Die in den Figuren 1 - 6 allgemein mit 1 bezeichnete Düse dient als Wasch- und Reinigungsdüse zur Reinigung von Windschutzscheiben, Scheinwerfern, Heckleuchten, Kameras usw. und besteht in an sich bekannter Weise aus einem Düsenkörper 2, der aus einem geeigneten Material und in einer geeigneten Technik, beispielsweise als Spritzgießformteil aus Kunststoff gefertigt ist, sowie aus einem Düsenchip oder -einsatz 3, der ebenfalls aus einem geeigneten Material, z. B. aus Kunststoff, eventuell auch aus einem weichelastischen Kunststoff hergestellt ist.

Bei der dargestellten Ausführungsform ist der Düsenkörper 2 quaderförmig ausgebildet, und zwar mit einer Oberseite 2.1, mit einer Vorderseite 2.2, einer Rückseite 2.3 und zwei Längsseiten 2.4. Auch andere Formen für den Düsenkörper 2 sind selbstverständlich denkbar.

Im Düsenkörper 2, der in den Figuren 1 - 6 einteilig dargestellt ist, aber auch mehrteilig ausgebildet sein kann, ist eine Ausnehmung 4 vorgesehen, die sich bei der dargestellten Ausführungsform aus zwei in Richtung der Düsenachse DA oder X-Achse aneinander anschließenden Abschnitten zusammensetzt, und zwar aus dem innen liegenden Abschnitt 4.1 und dem Abschnitt 4.2. Der Abschnitt 4.1 weist bei der dargestellten Ausführungsform in Querschnittsebenen parallel zur YZ-Ebene einen konstanten, rechteckförmigen Querschnitt auf, und zwar mit der kleineren Querschnittsabmessung in der Y-Achse. Der Abschnitt 4.2 bildet an der Vorderseite 1.1 der Düse 1 bzw. an der Vorderseite 2.2 des Düsenkörpers 2 die mit ihrer Längserstreckung in Richtung der Z-Achse liegende schlitzförmige Düsenöffnung 5 und weist bei der dargestellten Ausführungsform in der Y-Achse eine konstante Querschnittsabmessung auf, die allerdings etwas größer ist als die Querschnittsabmessung des Abschnittes 4.1 in dieser Y-Achse. Die Breite des Abschnitts 4.2 in der Z-Achse nimmt mit zunehmendem Abstand vom Abschnitt 4.1 trichterartig zu.

Am Übergang zum Abschnitt 4.1 besitzt der Abschnitt 4.2 in Richtung der Z-Achse eine Breite, die bei der dargestellten Ausführungsform gleich der entsprechenden Breite des Abschnittes 4.1 ist. Die unteren, der Oberseite 2.1 weiter entfernten und in der XZ-Ebene liegenden Begrenzungsflächen der Abschnitte 4.1 und 4.2 sind in einer gemeinsamen Ebene angeordnet. Durch die größere Höhe, die der Abschnitt 4.2 in der Y-Achse aufweist, ist am Übergang 4.3 zwischen den Abschnitte 4.1 und 4.2 eine Stufe gebildet.

Der Düseneinsatz 3 ist bei der dargestellten Ausführungsform plättchenförmig ausgeführt, und zwar derart, daß er passend vom Abschnitt 4.1 aufgenommen ist. Die Montage des Düseneinsatzes 3 kann bei der dargestellten Ausführungsform von der Düsenöffnung 5 her durch Einschieben erfolgen. Der Düseneinsatz 3 besitzt eine Öffnung 6, die bei der dargestellten Ausführungsform rechteckförmig ausgebildet ist, von der Oberseite 3.1 bis an die Unterseite 3.2 des Düseneinsatzes 3 reicht und in die drei in die Oberseite 3.1 eingeformte Kanalrinnen 7 jeweils mit einem Ende münden. Die Kanalrinnen 7 enden mit ihren anderen Enden jeweils an einer Umfangsseite 3.3 des als rechteckförmige Platte ausgebildeten Düseneinsatzes 3, und zwar die mittlere Kanalrinne 7 in der Mitte (Mittelebene M') dieser Seite 3.3 und die beiden anderen äußeren Kanalrinnen 7 jeweils in einem abgeschrägten Eckbereich 3.3.1 am Übergang der Seite 3.3 zu einer benachbarten Längsseite 3.4.

Die Kanalrinnen 7 sind so angeordnet, daß die mittlere Kanalrinne 7 mit ihrer Längserstreckung oder Achse parallel zu den beiden Seiten 3.4 liegt und die beiden äußeren Kanalrinnen 7 bzw. deren Achsen mit zunehmendem Abstand von der Öffnung 6 einen zunehmenden Abstand von der mittleren Kanalrinne 7 aufweisen. Der Winkel α, den die Achse einer äußeren Kanalrinne 7 jeweils mit der Längsachse der mittleren Kanalrinne 7 einschließt, ist gleich dem Winkel β, den die abgeschrägten Bereiche 3.3.1 mit der Ebene der Seite 3.3 bilden. Bei der dargestellten Ausführungsform ist der Düseneinsatz 3 weiterhin symmetrisch zu der, die Achse der mittleren Kanalrinne 7 einschließenden und senkrecht zur Oberseite 3.1 bzw. zur Unterseite 3.2 verlaufenden Mittelebene M' ausgebildet.

Im montierten Zustand liegt der Einsatz 3 mit seiner Unterseite 3.2 gegen die der Oberseite 2.1 des Düsenkörpers 2 abgewandte Unterseite des Abschnittes 4.1 und mit der Oberseite 3.1 gegen die Oberseite dieses Abschnittes an. Die Öffnung 6 bildet somit eine Kammer 6a, in die ein erster, im Düsenkörper 2 ausgebildeter Zuführkanal 9.1 für das flüssige Reinigungsmedium (z. B. Waschwasser) mündet. Die Kanalrinnen 7 bilden innere Düsenkanalabschnitte 7a, die von der Kammer 6 ausgehend divergierend in den Abschnitt 4.2 der Waschdüse 1 münden. Die Achsen der divergierenden Kanalabschnitte 7a sind in einer gemeinsamen XZ-Ebene angeordnet und die Achse des mittleren Kanalabschnitts 7a liegt in der X-Achse bzw. in der Düsenachse DA. Die Querschnitte der Kanalabschnitte 7a sind kleiner als der Querschnitt des Abschnitts 4.2 am Übergang 4.3.

Im Düsenkörper 2 ist ein zweiter Zuführkanal 9.2 ausgebildet, der ebenfalls mit seiner Längserstreckung in der Y-Achse liegt und in den Abschnitt 4.2 mündet, der den sich in der Breite zu der schlitzförmigen Düsenöffnung 5 erweiternden Düsenkanalabschnitt bildet. Die Mündungsöffnung 9.2.1 des Zuführkanals 9.2 befindet sich ebenso wie die Mündungsöffnung 9.1.1 des Zuführkanals 9.1 an der der Düsenkörperoberseite 2.1 abgewandten Unterseite der Ausnehmung 4 in der XZ-Ebene, und zwar die Mündungsöffnung des Zuführkanals 9.2 am Übergang 4.3 derart, daß diese Mündungsöffnung geringfügig noch durch die Vorderseite 3.3 des Einsatzes 3 abgedeckt ist.

Bei der dargestellten Ausführungsform sind die Abschnitte 4.1 und 4.2 sowie auch die Kanalabschnitte 7a symmetrisch zu einer gedachten Mittelebene M angeordnet bzw. ausgebildet, die (Mittelebene) die X-Achse sowie die Achsen der Zuführungskanäle 9.1 und 9.2 einschließt und senkrecht zur XZ-Ebene orientiert ist.

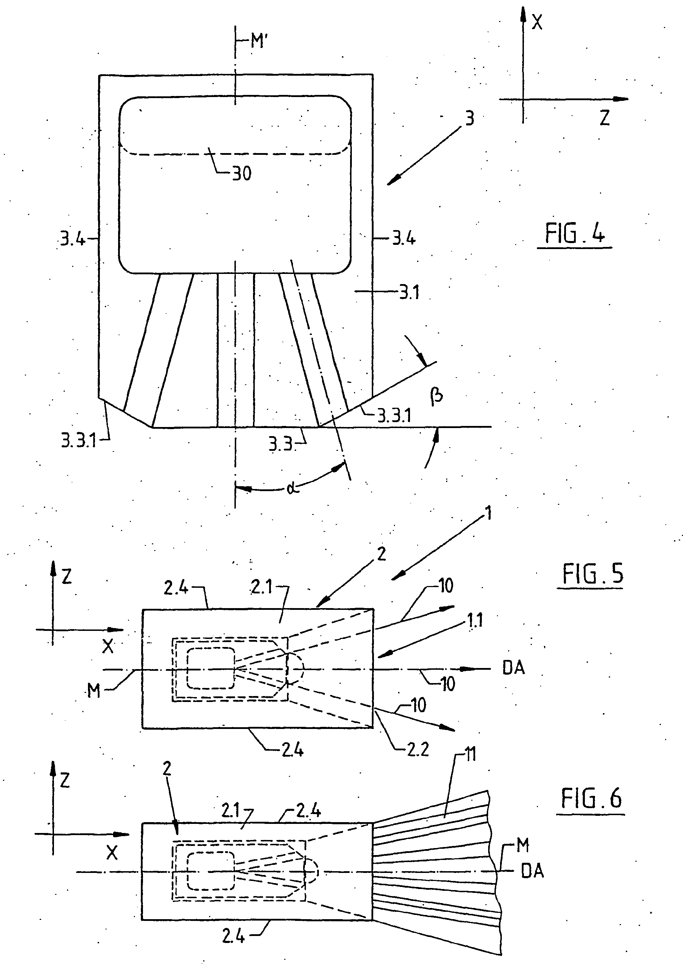

Wie die Figuren 5 und 6 zeigen, sind mit der Waschdüse 1 zwei unterschiedliche Betriebszustände möglich, und zwar ein erster Betriebszustand, bei dem das flüssige Reinigungsmedium lediglich über den Zuführkanal 9.1 zugeführt wird (Pfeil A), und zwar mit einem vorgegebenen Druck, so daß von den internen Düsenkanalabschnitten 7a drei durch den Abschnitt 4.2 an der Düsenöffnung 5 austretende Vollstrahlen 10 des flüssigen Reinigungsmediums erzeugt werden. Das flüssige Reinigungsmedium wird hierbei der Waschdüse 1 bzw. dem Zuführkanal 9.1 mit einem Druck, beispielsweise größer als 1,5 bar zugeführt.

Der zweite Betriebszustand ist in der Figur 6 angedeutet. Bei diesem Betriebszustand wird das flüssige Reinigungsmedium sowohl über den Zuführkanal 9.1 (Pfeil A) als auch über den Zuführkanal 9.2 (Pfeil B) zugeführt. Hierbei werden zwar wiederum von dem über den Zuführkanal 9.1 zugeführten Reinigungsmedium an den Öffnungen der Düsenkanalabschnitte 7a zunächst drei Primär- oder Hauptstrahlen erzeugt. Diese werden dann aber durch das senkrecht zur jeweiligen Strahlrichtung über den Zuführkanal 9.2 bzw. dessen Öffnung 9.2.1 in den Abschnitt 4.2 eintretende Reinigungsmedium (Kollisionsstrahl) zerstäubt, so daß ein fächerförmiger flacher Strahl 11 aus der Düsenöffnung 5 auf die zu reinigende Oberfläche austritt. Der Abschnitt 4.2 wirkt hierbei als Kollisions- und/oder Mischraum. Die den Abschnitt 4.2 oben begrenzende Oberseite sowie die diesen Abschnitt unten begrenzende Unterseite dienen als Führungslippen, die den austretenden fächerförmigen Strahl 11 formen und stabilisieren. Bei dem Betriebszustand der Figur 6 wird das flüssige Reinigungsmedium der Waschdüse 1 bzw. den Zuführungen 9.1 und 9.2 mit einem gegenüber dem Betriebszustand der Figur 5 reduzierten Druck zugeführt, beispielsweise mit einem Druck kleiner als 1,5 bar.

Die punktförmigen Strahlen 10 bzw. der Betriebszustand der Figur 5 eignet sich beispielsweise zum Reinigen von Fahrzeugfront- oder Heckscheiben und/oder Scheinwerferscheiben und/oder Kameras bei hoher Fahrgeschwindigkeit eines Fahrzeugs. Der fächerförmige Strahl 11 eignet sich insbesondere zum Reinigen bei niedriger Fahrgeschwindigkeit.

Das Umschalten zwischen den beiden Betriebszuständen erfolgt beispielsweise durch eine in der Figur 1 sehr schematisch angedeutete Ventilanordnung 12, die z. B. für mehrere Düsen 1 gemeinsam vorgesehen und druckgesteuert ist. Falls erforderlich, können an der Düsenaustrittsöffnung noch zusätzliche Führungslippen zur Stabilisierung insbesondere des Strahles 11 vorgesehen sein.

Die Vorteile der Waschdüse 1 gegenüber bekannten Düsen bestehen u.a. in der Möglichkeit der Umschaltung zwischen den beiden Betriebszuständen (punktförmige Strahlen bzw. Vollstrahlen 10 bzw. fächerförmiger Strahl 11), in der optimalen Anpassung an unterschiedliche Fahrgeschwindigkeiten, in der optimalen Verteilung der Reinigungsflüssigkeit auf der jeweils zu reinigenden Oberfläche, ebenfalls angepaßt an die jeweilige Fahrgeschwindigkeit des Fahrzeugs sowie in einer kleinvolumigen Bauform, und zwar trotz der Möglichkeit einer Änderung des Betriebszustandes bzw. trotz der Ausbildung der Waschdüse 1 als Multifunktionsdüse.

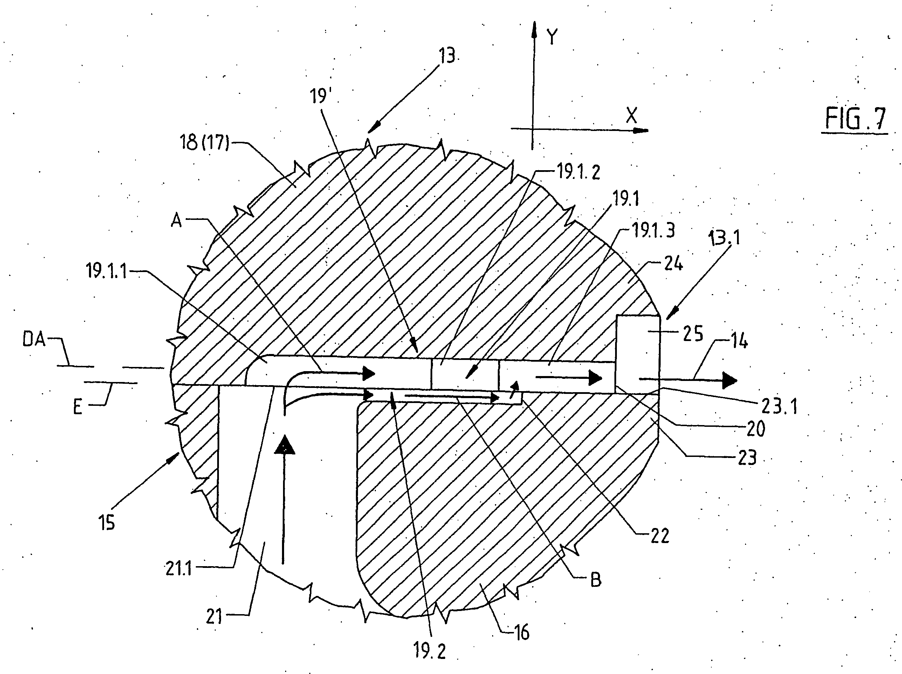

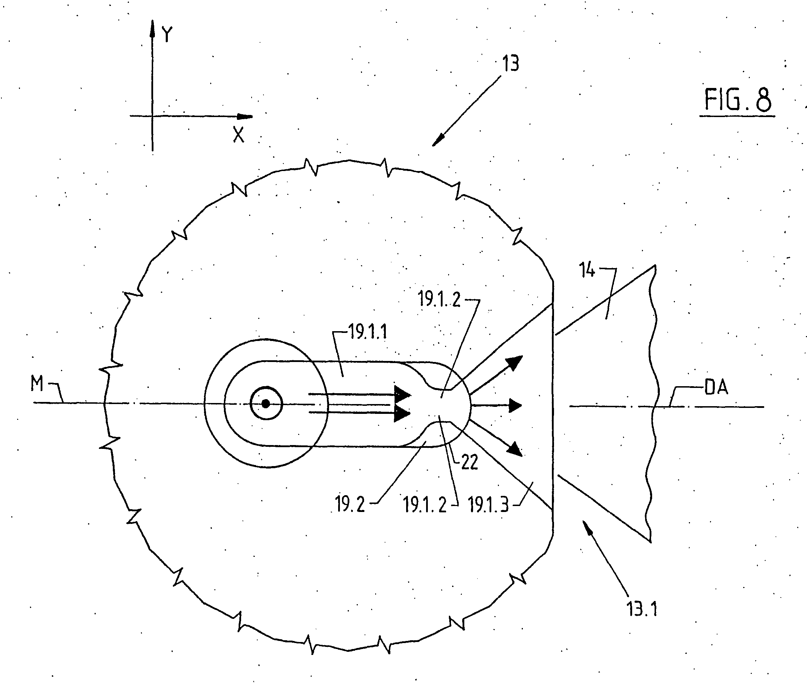

Die Figuren 7 und 8 zeigen in einer eher schematischen Darstellung als eine weitere, mögliche Ausführungsform der Erfindung eine Waschdüse 13, die von ihrer Funktion her mit der Waschdüse 1 insoweit übereinstimmt, als zur Bildung eines optimalen, flachen und fächerförmigen Düsenstrahls 14 in einen Hauptstrahl des flüssigen Reinigungsmediums senkrecht zur Richtung dieses Strahles, d. h. senkrecht zur Düsenachse DA ein zweiter Strahl (Kollisionsstrahl) eingebracht wird, so daß hierbei ein Zerreißen oder Zerstäuben des Hauptstrahles bewirkt wird, und zwar bei dieser Ausführungsform mit dem Ergebnis einer Erhöhung der Tropfengröße in dem Düsenstrahl 14.

Die Waschdüse 13 besitzt bei der dargestellten Ausführungsform einen Düsenkörper 15, der zweiteilig ausgebildet ist, und zwar bestehend aus dem Düsenkörperunterteil 16 und dem Düsenkörperoberteil 17 mit einem eingeformten Düseneinsatz 18. Am Übergang zwischen dem Unterteil 16 und dem Oberteil 17 bzw. dem Einsatz 18 (Ebene E) ist im Düsenkörper 15 ein Düsenkanal 19 gebildet, der an einer Vorderseite 13.1 der Düse 13 in einer schlitzförmigen Düsenöffnung 20 für den Austritt des Düsenstrahls 14 endet.

Der Düsenkanal 19 liegt mit seiner Längserstreckung wiederum in der X-Achse, die auch die Düsenachse DA ist. Die Düsenöffnung 20 liegt mit ihrer Längserstreckung in der Z-Achse, wobei die Ebene der Düsenöffnung 20 wiederum die YZ-Ebene ist. An dem der Düsenöffnung 20 entfernt liegenden Ende mündet in den Düsenkanal 19 ein Zuführungskanal 21 für das flüssige Reinigungsmedium, und zwar über die Mündungsöffnung 21.1. Zumindest im Bereich dieser Mündungsöffnung ist der Zuführkanal 21 mit seiner Achse in der Y-Achse orientiert.

Wie insbesondere die Figuren 7 und 8 sehr deutlich zeigen, setzt sich der Düsenkanal 19 aus zwei Düsenkanalabschnitten 19.1 und 19.2 zusammen, die von wannenartigen Vertiefungen oder Ausnehmungen gebildet sind, die in das Unterteil 16 und in das Oberteil 17 bzw. in den Einsatz 18 eingeformt sind, und zwar an Flächen, die in der senkrecht zur Y-Achse liegenden Ebene E aneinander anschließen, so daß sich die wannenartigen Ausnehmungen bzw. die von diesen gebildeten Kanalabschnitte 19.1 und 19.2 zu dem Düsenkanal 19 ergänzen.

Der Düsenkanalabschnitt 19.1 besteht bei der dargestellten Ausführungsform aus drei sich in Richtung der Düsenachse DA bzw. der X-Achse aneinander anschließenden Teilabschnitten, und zwar aus dem langgestreckten Teilabschnitt 19.1.1 ausgehend von der Öffnung 21.1 mit einer konstanten Breite in Richtung der Z-Achse und einer konstanten Höhe in Richtung der Y-Achse, aus dem sich an den Teilabschnitt 19.1.1 in Richtung zur Düsenöffnung 20 hin anschließenden Abschnitt 19.1.2, dessen Breite in Richtung der Z-Achse sich bei gleichbleibender Höhe (Y-Achse) verringert und anschließend wieder vergrößert, und aus dem letztlich die Düsenöffnung 20 bildenden Abschnitt 19.1.3, dessen Breite in Richtung der Z-Achse sich bei gleichbleibender Höhe (Y-Achse) trichter- oder kegelförmig bis auf die Breite der Düsenöffnung 20 vergrößert.

Der Düsenkanalabschnitt 19.2 bzw. die diesen Abschnitt bildende wannenartige Ausnehmung im Unterteil 16 mündet mit einem Ende in den Zuführkanal 21 bzw. in die Öffnung 21.1 und erstreckt sich in Richtung der X-Achse unter dem Teilbereich 19.1.2 derart hindurch, daß das dem Zuführkanal 21 entfernt liegende Ende 22 des Düsenkanalabschnittes 19.2 bzw. der diesen Abschnitt 19.2 bildenden Ausnehmung im Bereich des Teilabschnittes 19.1.3 liegt, allerdings in einem Abstand von der Düsenöffnung 20, der deutlich größer ist als der Abstand von dem Teilabschnitt 19.1.2.

Wird der Waschdüse 13 am Zuführungskanal 21 das flüssige Reinigungsmedium mit einer vorgegebenen Menge und mit einem vorgegebenen Druck zugeführt, so ergeben sich im Inneren des Düsenkanals 19 im wesentlichen zwei zunächst parallele Ströme, nämlich wiederum der Hauptstrom A im Düsenkanalabschnitt 19.1, aus dem im Bereich der von dem Teilabschnitt 19.1.2 gebildeten Verengung und dem anschließenden als Expansionsraum wirkenden Teilabschnitt 19.1.3 ein fächerförmiger Primär-Flachstrahl erzeugt wird, sowie im Kanalabschnitt 19.2 der Kollisionsstrom B, der in diesen Kanalabschnitt 19.2 zunächst parallel zum Hauptstrom A fließt, dann auf die von dem Ende 22 gebildete Umlenkfläche trifft und an dieser umgelenkt im wesentlichen in Richtung der Y-Achse und damit quer zur Strömungsrichtung des Hauptstromes auf diesen auftrifft und dadurch den Hauptstrom A im Teilabschnitt 19.1.3 zur Verbesserung der Eigenschaften des austretenden Düsenstrahles 14 modifiziert bzw. zerreißt. Der Teilabschnitt 19.1.3 dient wieder als Kollisions- und/oder Mischraum. Die auf das Ende 22 in Strömungsrichtung folgende Teillänge des Düsenkanales 19 bzw. des Teilabschnittes 19.1.3 wirkt auch als Beruhigungsstrecke und dient der Stabilisierung und Ausrichtung des Düsenstrahles 14.

Bei der dargestellten Ausführungsform sind der Düsenkanal 19 bzw. die diesen Kanal bildenden Kanalabschnitte 19.1 und 19.2 symmetrisch zu einer gedachten Mittelebene M ausgebildet, die (Mittelebene) die X-Achse sowie die Achse des Zuführungskanals 21 einschließt und senkrecht zur Ebene E orientiert ist.

Wie in der Figur 7 bei 23 und 24 angedeutet ist, setzen sich der Düsenkörper 15 bzw. das Unterteil 16 und Oberteil 17 über die eigentliche Düsenöffnung 20 hinaus an der Düsenvorderseite 13.1 fort, und zwar derart, daß sich die Düsenöffnung 20 innerhalb einer an der Düsenvorderseite 13.1 offenen Ausnehmung 25 befindet, die in Richtung der Y-Achse eine Höhe aufweist, welche deutlich größer ist als die Höhe der Düsenöffnung 20, deren Breite in Richtung der X-Achse an der Düsenöffnung 20 wenigstens gleich der Breite dieser Düsenöffnung ist und die sich im gleichen Winkel wie die Düsenöffnung nach außen hin verbreitert.

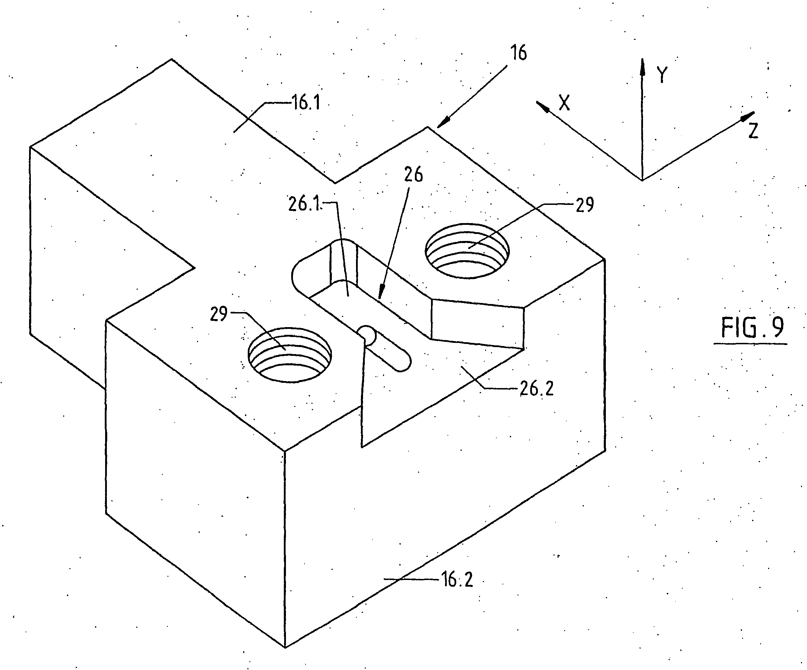

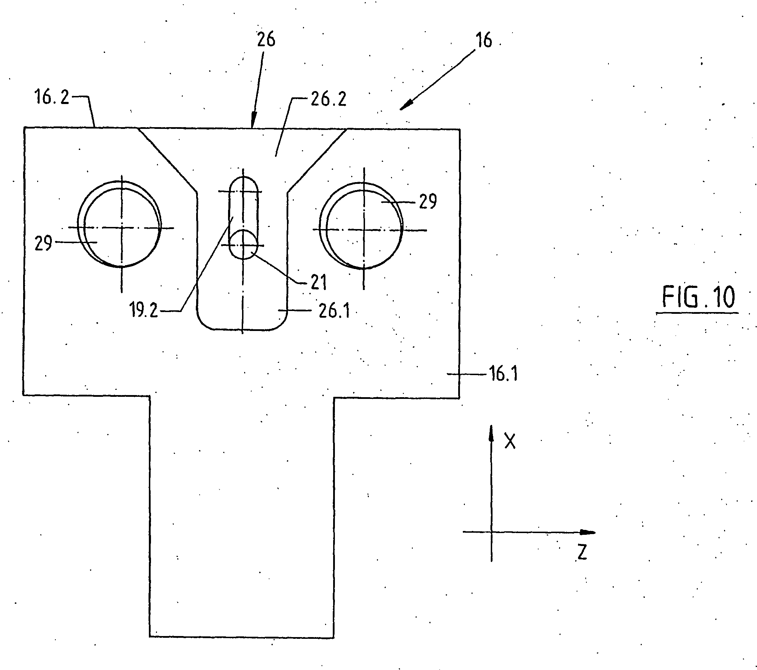

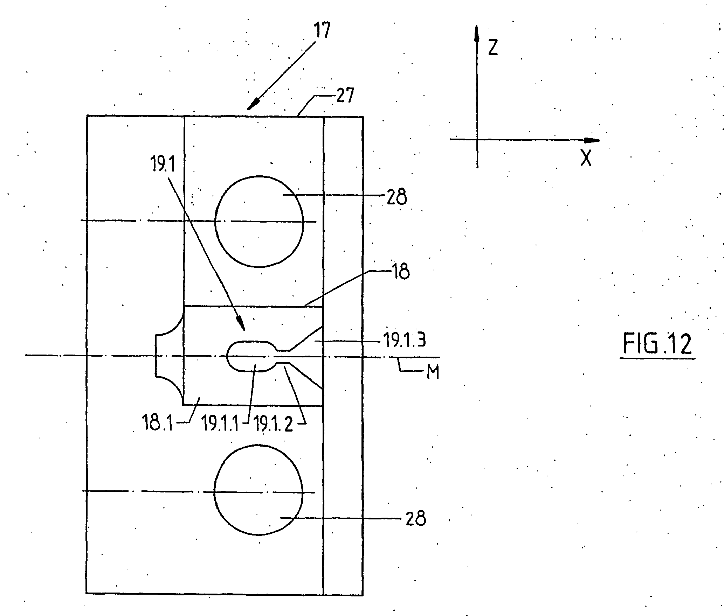

Die Figuren 9 -12 zeigen die Ausbildung des Unterteils 16 und des Oberteils 17 mehr im Detail. Beide Teile sind jeweils block- oder klotzartig ausgebildet, und zwar das Unterteil 16 an seiner in der XZ-Ebene liegenden Oberseite 16.1 mit einer zu dieser Oberseite sowie zu der in der YZ-Ebene liegenden Vorderseite 16.2 hin offenen Ausnehmung 26, die bei der dargestellten Ausführungsform in Richtung der Y-Achse eine konstante Tiefe besitzt und von zwei in Richtung der X-Achse aneinander anschließenden Abschnitten gebildet ist, und zwar von dem Abschnitt 26.1 mit im wesentlichen gleichbleibender Breite und von dem sich anschließenden Abschnitt 26.2, dessen Breite in Richtung der Z-Achse mit zunehmendem Abstand von dem Abschnitt 26.1 zunimmt und der letztlich die Ausnehmung 25 der Waschdüse 13 bildet.

Am Boden des Abschnittes 26.1, der die Ebene E definiert, mündet der Zuführungskanal 21. Weiterhin ist in dem Boden des Abschnittes 26.1 der Düsenkanalabschnitt 19.2 bzw. die diesen Kanalabschnitt bildende wannenartige Ausnehmung eingebracht.

Das Oberteil 17 besteht aus einem quaderförmigen Grundkörper 27 und aus dem ebenfalls quaderförmig ausgebildeten und an der Unterseite 27.1 des Grundkörpers angeformten Einsatz 18. Die Abmessungen des Einsatzes 18 sind so gewählt, daß dann, wenn das Oberteil 17 mit der Unterseite 27.1 auf die Oberseite 16.1 aufgesetzt ist, der Einsatz 18 passend im Abschnitt 26.1 der Ausnehmung 26 aufgenommen ist und die dem Grundkörper 27 abgewandte Unterseite 18.1 des Einsatzes 18 in der Ebene E liegt. In der Unterseite 18.1 ist der Kanalabschnitt 19.1 bzw. die diesen Abschnitt bildende wannenartige Vertiefung eingeformt. Mit Hilfe von nicht dargestellten Schrauben, die durch Bohrungen 28 des Oberteils 17 bzw. des Grundkörpers 27 in Gewindebohrungen 29 des Unterteils 16 eingreifen, werden beide Teile aneinander befestigt.

Die Fortsetzung 23 bildet eine Fläche 23.1, die in einer gemeinsamen XZ-Ebene, d.h. in der Ebene E mit dem unteren, sich in Richtung der Z-Achse erstreckenden Rand der Düsenöffnung 20 liegt und wirkt hierdurch als zusätzliche Lippe zur Stabilisierung und Ausrichtung des Düsenstrahles 14.

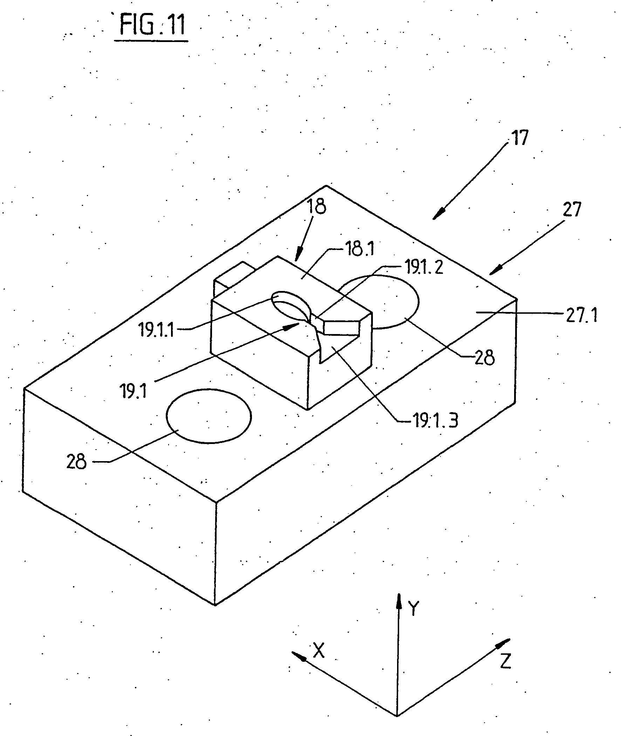

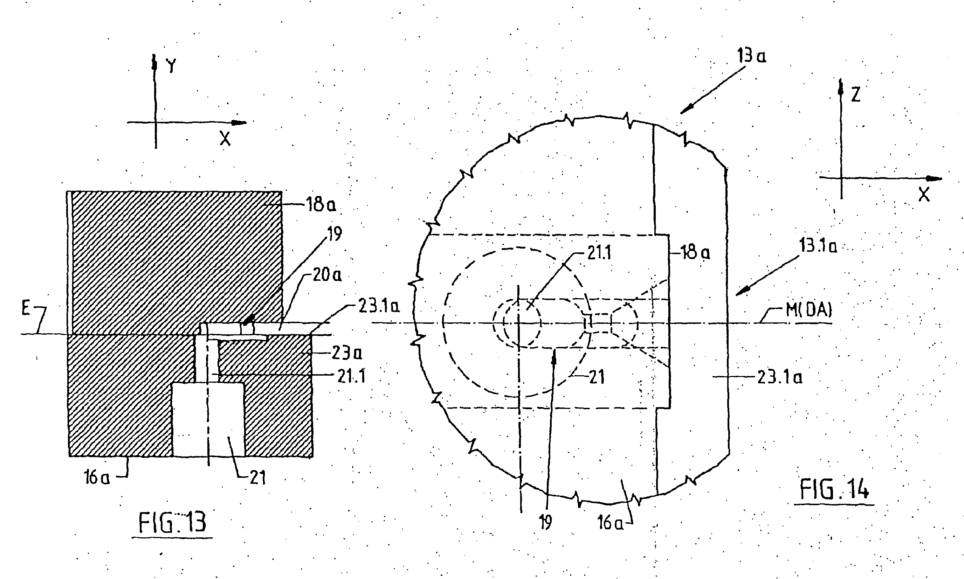

Die Figuren 11 - 13 zeigen als weitere mögliche Ausführungsform eine Waschdüse 13a, die sich von der Waschdüse 13 im wesentlichen nur dadurch unterscheidet, daß das Unterteil 16a lediglich eine dem Abschnitt 26.1 entsprechende Ausnehmung aufweist, in die der dem Einsatz 18 entsprechende Einsatz 18a eingesetzt ist, wobei das Unterteil 16a an der Vorderseite 13a.1 der Waschdüse 13 einen stufenartigen, über die Düsenöffnung 20a wegstehenden Vorsprung 23a aufweist, dessen in der XZ-Ebene liegende Fläche 23.1 a wiederum mit zur Stabilisierung des austretenden Düsenstrahles dient. Selbstverständlich kann auch bei dieser Ausführungsform der Einsatz 18a wiederum Bestandteil eines dem Oberteil 17 entsprechenden Oberteils mit einem dem Grundkörper 27 entsprechenden Grundkörper sein.

Die Erfindung wurde voranstehend an Ausführungsbeispielen erläutert. Es versteht sich, daß zahlreiche Änderungen sowie Abwandlungen möglich sind, ohne daß dadurch der der Erfindung zugrunde liegende Erfindungsgedanke verlassen wird. So ist es beispielsweise möglich, bei der Waschdüse 1 bzw. bei dem dortigen Düseneinsatz 3 anstelle der Öffnung 6 an der Oberseite 3.1 eine Ausnehmung vorzusehen, die, wie in der Figur 4 mit der unterbrochenen Linie 30 angedeutet ist, nun in einem den Kanalrinnen 7 entfernt liegenden Teilbereich als durchgehendes Fenster ausgeführt ist, durch welches über den Zuführungskanal 9.1 das flüssige Reinigungsmedium in die Kammer 6a gelangt, während ansonsten die Ausnehmung lediglich als Vertiefung ausgebildet ist, in die die Kanalrinnen 7 jeweils mit einem Ende münden.

### Bezugszeichenliste

- 1: Waschdüse
- 1.1: Düsenvorderseite
- 2: Düsenkörper
- 2.1: Düsenkörperoberseite
- 2.2: Düsenkörpervorderseite
- 2.3: Düsenkörperrückseite
- 2.4: Düsenkörperlängsseite
- 3: Düseneinsatz
- 3.1: Oberseite des Düseneinsatzes
- 3.2: Unterseite des Düseneinsatzes
- 3.3: Vorderseite des Düseneinsatzes
- 3.3.1: abgeschrägter Eckbereich
- 3.4: Längsseite des Düseneinsatzes
- 4: Ausnehmung
- 4.1, 4.2: Abschnitt der Ausnehmung
- 4.3: Übergang zwischen den Abschnitten 4.1 und 4.2
- 5: Düsenöffnung
- 6: Ausnehmung
- 6.1, 6.2: Abschnitt der Ausnehmung
- 6a: Kammer
- 7: Kanalrinne
- 7a: innerer Düsenkanalabschnitt
- 8: Düsenkanal
- 9.1, 9.2: Zuführungskanal
- 9.1.1, 9.2.1: Öffnung des Zuführkanals
- 10: Punktstrahl
- 11: Fächerstrahl
- 12: Steuerventil
- 13, 13a: Waschdüse
- 13.1, 13.1 a: Düsenvorderseite
- 14: Düsenstrahl
- 15: Düsenkörper
- 16, 16a: Düsenkörperunterteil
- 17: Düsenkörperoberteil
- 18, 18a: Einsatz
- 19: Düsenkanal
- 19.1, 19.2: Düsenkanalabschnitt
- 19.1.1, 19.1.2, 19.1.3: Teilabschnitt
- 20, 20a: Düsenöffnung
- 21: Zuführungskanal
- 21.1: Mündungsöffnung des Zuführkanals
- 22: Ende
- 23,24: Vorsprung
- 23.1, 23.1a: Fläche
- 25: Ausnehmung
- 26: Ausnehmung
- 26.1, 26.2: Abschnitt der Ausnehmung 26
- 27: Grundkörper des Oberteils 17
- 28: Bohrung
- 29: Gewindebohrung
- 30: Randlinie
- A: Hauptstrom
- B: Kollisionsstrom
- E: Ebene
- M, M': Mittelebene
- X, Y, Z: Raumachse
- α, β: Winkel

## Patentansprüche

1. Waschdüse zur Verwendung an Fahrzeugen zum Ausbringen eines flüssigen Reinigungs- oder Waschmediums, mit wenigstens einem Düsenkanal (8) in einem Düsenkörper (2), mit wenigstens einer von dem Düsenkanal (8) gebildeten Düsenöffnung (5) für den Austritt wenigstens eines Düsenstrahls (10, 11), mit wenigstens einer in den Düsenkanal (8) mündenden Zuführung (9.1) zum Zuführen des Reinigungsmediums sowie mit wenigstens einem Abschnitt (7a) im Düsenkanal (8) zur Erzeugung zumindest eines Hauptstrahls aus dem Reinigungsmedium, und mit Mitteln (9.2) zur Beaufschlagung des wenigstens einen Hauptstrahls mit einem Kollisionsstrahl innerhalb des Düsenkörpers (2) in einem in Strömungsrichtung vor der Düsenöffnung (5) vorgesehenen Kollisionsraum (4.2), wobei der Bereich zur Erzeugung des wenigstens einen Hauptstrahles in Strömungsrichtung vor dem Kollisionsraum (4.2) vorgesehenen ist, der Bereich zur Erzeugung des Hauptstrahles von wenigstens einer Verengung im Düsenkanal in der Weise gebildet ist, dass die Verengung von wenigstens einem Kanalabschnitt (7a) mit reduziertem Querschnitt gebildet ist, und wobei weiterhin der wenigstens eine Kanalabschnitt (7a) an einem im Düsenkörper (2) bzw. in einer dortigen Ausnehmung (4.1) aufgenommenen Düsenchip (3) gebildet ist, **dadurch gekennzeichnet, dass** der Düsenchip (3) an einer Außenfläche mit wenigstens einer den verengten Düsenkanalabschnitt (7a) bildenden Kanalrinne (7) versehen ist.

2. Waschdüse nach Anspruch 1, **dadurch gekennzeichnet, daß** der Düsenkanal (8) wenigstens zwei Kanalabschnitte (7a) mit reduziertem Querschnitt aufweist.

3. Waschdüse nach Anspruch 2, **dadurch gekennzeichnet, daß** die Achsen der Kanalabschnitte (7a) einen Winkel (α) miteinander einschließen und hierbei ausgehend von einer mit einer Zuführung (9.1) verbundenen Kammer (6a) in den Kollisionsraum (4.2) divergierend münden.

4. Waschdüse nach einem der vorhergehenden Ansprüche, **dadurch gekennzeichnet, daß** die wenigstens zwei, einen reduzierten Querschnitt aufweisenden Kanalabschnitte (7a) mit ihren Achsen in einer gemeinsamen Ebene (XZ-Ebene) angeordnet sind.

5. Waschdüse nach Anspruch 4, **dadurch gekennzeichnet, daß** bei Ausbildung der Waschdüse (1) mit einer schlitzförmigen Düsenöffnung (5) zur Erzeugung eines fächerförmigen oder flachen Düsenstrahls (11) die gemeinsame Ebene (XZ-Ebene) parallel zu der längeren Seite der schlitzförmigen Düsenöffnung (5) liegt.

6. Waschdüse nach einem der vorhergehenden Ansprüche, **dadurch gekennzeichnet, daß** die Mittel zur Beaufschlagung des wenigstens einen Hauptstrahles mit dem wenigstens einen Kollisionsstrahl von wenigstens einer in den Kollisionsraum (4.2) mündenden Öffnung (9.2.1) einer zweiten Zuführung (9.2) für das den Kollisionsstrahl bildende Reinigungsmedium gebildet sind.

7. Waschdüse nach Anspruch 6, **dadurch gekennzeichnet, daß** die zweite Zuführung (9.2) bzw. deren Öffnung (9.2.1) in einer Achsrichtung senkrecht oder nahezu senkrecht zu einer Düsenachse (DA) und/oder zu der gemeinsamen Ebene (XZ-Ebene) der Kanalabschnitte (7a) mit reduziertem Querschnitt orientiert ist.

8. Waschdüse nach Anspruch 6 oder 7, **dadurch gekennzeichnet, daß** die zweite Zuführung (9.2) bzw. deren Öffnung (9.2.1) in einer Achsrichtung senkrecht oder nahezu senkrecht zu der längeren Seite der Düsenöffnung (5) orientiert ist.

9. Waschdüse zur Verwendung an Fahrzeugen zum Ausbringen eines flüssigen Reinigungs- oder Waschmediums, mit wenigstens einem Düsenkanal (19) in einem Düsenkörper (15, 15a), mit wenigstens einer von dem Düsenkanal gebildeten Düsenöffnung (20, 20a) für den Austritt wenigstens eines Düsenstrahls (14), mit wenigstens einer in den Düsenkanal (19) mündenden Zuführung (21) zum Zuführen des Reinigungsmediums sowie mit wenigstens einem Abschnitt (19.1.2) im Düsenkanal (19) zur Erzeugung zumindest eines Hauptstrahls aus dem Reinigungsmedium, und mit Mitteln (19.2, 22) zur Beaufschlagung des wenigstens einen Hauptstrahls mit einem Kollisionsstrahl innerhalb des Düsenkörpers (15, 15a) in einem in Strömungsrichtung vor der Düsenöffnung (20, 20a) vorgesehenen Kollisionsraum (19.1.3), **dadurch gekennzeichnet, daß** der Düsenkanal (19) wenigstens zwei parallele Kanalabschnitte (19.1,19.2) aufweist, die jeweils mit einer Zuführung (21) für das flüssige Reinigungsmedium in Verbindung stehen und von denen ein Kanalabschnitt (19.1) den Bereich (19.1.2) zur Bildung des Hauptstrahles aufweist und der der andere Kanalabschnitt (19.2) in Strömungsrichtung nach dem Bereich (19.1.2) zur Bildung des Hauptstrahles endet und dort mit dem Kollisionsraum (19.1.3) in Verbindung steht.

10. Waschdüse nach Anspruch 9, **dadurch gekennzeichnet, daß** der andere Kanalabschnitt (19.2) über seine gesamte Länge mit dem einen Kanalabschnitt (19.1) in Verbindung steht.

11. Waschdüse nach Anspruch 9 oder 10, **dadurch gekennzeichnet, daß** die Kanalabschnitte mit einer gemeinsamen Zuführung (21) verbunden sind.

12. Waschdüse nach einem der Ansprüche 9-11, **dadurch gekennzeichnet, daß** der eine Kanalabschnitt (19.1) ausgehend von der Zuführung (21) in einer ersten Achsrichtung (X-Achse) an einander anschließend einen sich in Strömungsrichtung erstreckenden ersten Teilabschnitt (19.1.1), daran anschließend einen zweiten Teilabschnitt (19.1.2), der sich in wenigstens einer zur ersten Achse (X-Achse) senkrechten zweiten Achse (Z-Achse) verengt und wieder erweitert, und daran anschließend einen sich in wenigstens einer Querschnittsachse (Z-Achse) zunehmend verbreiternden und in der Düsenöffnung (20, 20a) endenden dritten Teilabschnitt (19.1.3) aufweist.

13. Waschdüse nach Anspruch 12, **dadurch gekennzeichnet, daß** der erste Teilabschnitt (19.1.1) und/oder der zweite Teilabschnitt (19.1.2) und/oder der dritte Teilabschnitt (19.1.3) in einer zur zweiten Achse (Z-Achse) senkrechten dritten Achse (Y-Achse) eine konstante oder nahezu konstante Abmessung aufweisen.

14. Waschdüse nach Anspruch 12 oder 13, **dadurch gekennzeichnet, daß** der andere Kanalabschnitt (19.2) in der zweiten Achsrichtung (Z-Achse) eine konstante oder nahezu konstante Breite besitzt, beispielsweise eine Breite, die gleich oder in etwa gleich der Breite des ersten Teilabschnittes (19.1.1) des einen Kanalabschnittes (19.1) ist.

15. Waschdüse nach einem der vorhergehenden Ansprüche, **dadurch gekennzeichnet, daß** der andere Kanalabschnitt (19.2) einen Querschnitt aufweist, der kleiner ist als der Querschnitt des einen Kanalabschnitts (19.1).

16. Waschdüse nach einem der vorhergehenden Ansprüche, **dadurch gekennzeichnet, daß** der andere Kanalabschnitt (19.2) in der dritten Achse (Y-Achse) eine Querschnittsabmessung aufweist, die kleiner ist als die Querschnittsabmessung, die der eine Kanalabschnitt (19.1) in dieser dritten Achse (Y-Achse) besitzt.

17. Waschdüse nach einem der vorhergehenden Ansprüche, **dadurch gekennzeichnet, daß** der Düsenkörper (15) zweiteilig ausgebildet ist, und daß der Düsenkanal (19) bzw. die Kanalabschnitte (19.1, 19.2) von Ausnehmungen oder Vertiefungen an aneinander anschließenden Flächen der Teile (16, 16a, 18, 18a) des Düsenkörpers (15, 15a) gebildet sind.

18. Waschdüse nach einem der vorhergehenden Ansprüche, **dadurch gekennzeichnet, daß** das der Zuführung (21) entfernt liegende Ende (22) des anderen Kanalabschnittes (19.2) eine Umlenkfläche zum Umlenken des Kollisionsstrahles in den Kollisionsraum (19.1.3) bildet.

## Claims

1. Washing nozzle for use on vehicles for applying a liquid cleaning or washing medium, comprising at least one nozzle channel (8) in a nozzle body (2), comprising at least one nozzle opening (5) formed by the nozzle channel (8) for the exit of at least one nozzle jet (10, 11), comprising at least one supply line (9.1) which opens into the nozzle channel (8) for supplying the cleaning medium, and also comprising at least one section (7a) in the nozzle channel (8) for generating at least one main jet from the cleaning medium, and comprising means (9.2) for acting on the at least one main jet with a collision jet within the nozzle body (2) in a collision space (4.2) provided upstream of the nozzle opening (5) in the flow direction, wherein the region for generating the at least one main jet is provided upstream of the collision space (4.2) in the flow direction, the region for generating the main jet is formed by at least one narrowing in the nozzle channel in such a way that the narrowing is formed by at least one channel section (7a) of reduced cross section, and wherein furthermore the at least one channel section (7a) is formed on a nozzle chip (3) which is accommodated in the nozzle body (2) or in a recess (4.1) therein, **characterised in that** the nozzle chip (3) is provided on an outer surface with at least one channel groove (7) which forms the narrowed nozzle channel section (7a).

2. Washing nozzle according to Claim 1, **characterised in that** the nozzle channel (8) comprises at least two channel sections (7a) of reduced cross section.

3. Washing nozzle according to Claim 2, **characterised in that** the axes of the channel sections (7a) enclose an angle (α) with one another and open out in a diverging manner from a chamber (6a) in the collision space (4.2) which is connected to a supply line (9.1).

4. Washing nozzle according to one of the preceding claims, **characterised in that** the at least two channel sections (7a) of reduced cross section are arranged with their axes in a common plane (XZ plane).

5. Washing nozzle according to Claim 4, **characterised in that**, when the washing nozzle (1) is formed with a slot-shaped nozzle opening (5) in order to generate a fan-shaped or flat nozzle jet (11), the common plane (XZ plane) lies parallel to the longer side of the slot-shaped nozzle opening (5).

6. Washing nozzle according to one of the preceding claims, **characterised in that** the means for acting on the at least one main jet with the at least one collision jet are formed by at least one opening (9.2.1) of a second supply line (9.2) for the cleaning medium which forms the collision jet, which opening opens into the collision space (4.2).

7. Washing nozzle according to Claim 6, **characterised in that** the second supply line (9.2) or the opening (9.2.1) thereof is oriented in an axis direction perpendicular or almost perpendicular to a nozzle axis (DA) and/or to the common plane (XZ plane) of the channel sections (7a) of reduced cross section.

8. Washing nozzle according to Claim 6 or 7,
**characterised in that** the second supply line (9.2) or the opening (9.2.1) thereof is oriented in an axis direction perpendicular or almost perpendicular to the longer side of the nozzle opening (5).

9. Washing nozzle for use on vehicles for applying a liquid cleaning or washing medium, comprising at least one nozzle channel (19) in a nozzle body (15, 15a), comprising at least one nozzle opening (20, 20a) formed by the nozzle channel for the exit of at least one nozzle jet (14), comprising at least one supply line (21) which opens into the nozzle channel (19) for supplying the cleaning medium, and also comprising at least one section (19.1.2) in the nozzle channel (19) for generating at least one main jet from the cleaning medium, and comprising means (19.2, 22) for acting on the at least one main jet with a collision jet within the nozzle body (15, 15a) in a collision space (19.1.3) provided upstream of the nozzle opening (20, 20a) in the flow direction, **characterised in that** the nozzle channel (19) comprises at least two parallel channel sections (19.1, 19.2) which are each connected to a supply line (21) for the liquid cleaning medium and of which one channel section (19.1) comprises the region (19.1.2) for forming the main jet and the other channel section (19.2) ends downstream of the region (19.1.2) for forming the main jet in the flow direction and is connected there to the collision space (19.1.3).

10. Washing nozzle according to Claim 9, **characterised in that** the other channel section (19.2) is connected over its entire length to the first channel section (19.1).

11. Washing nozzle according to Claim 9 or 10, **characterised in that** the channel sections are connected to a common supply line (21).

12. Washing nozzle according to one of Claims 9 to 11, **characterised in that** the first channel section (19.1) comprises, starting from the supply line (21), in a first axis direction (X-axis), one after the other, a first partial section (19.1.1) which extends in the flow direction, then a second partial section (19.1.2) which narrows and expands again in at least a second axis (Z-axis) which is perpendicular to the first axis (X-axis), and then a third partial section (19.1.3) which increasingly widens in at least one cross-sectional axis (Z-axis) and ends in the nozzle opening (20, 20a).

13. Washing nozzle according to Claim 12, **characterised in that** the first partial section (19.1.1) and/or the second partial section (19.1.2) and/or the third partial section (19.1.3) have a constant or almost constant dimension in a third axis (Y-axis) which is perpendicular to the second axis (Z-axis).

14. Washing nozzle according to Claim 12 or 13, **characterised in that** the other channel section (19.2) has a constant or almost constant width in the second axis direction (Z-axis), for example a width which is equal to or almost equal to the width of the first partial section (19.1.1) of the first channel section (19.1).

15. Washing nozzle according to one of the preceding claims, **characterised in that** the other channel section (19.2) has a cross section which is smaller than the cross section of the first channel section (19.1).

16. Washing nozzle according to one of the preceding claims, **characterised in that** the other channel section (19.2) has in the third axis (Y-axis) a cross-sectional dimension which is smaller than the cross-sectional dimension of the first channel section (19.1) in this third axis (Y-axis).

17. Washing nozzle according to one of the preceding claims, **characterised in that** the nozzle body (15) is made in two parts, and **in that** the nozzle channel (19) or the channel sections (19.1, 19.2) are formed by recesses or depressions on adjoining surfaces of the parts (16, 16a, 18, 18a) of the nozzle body (15, 15a).

18. Washing nozzle according to one of the preceding claims, **characterised in that** the end (22) of the other channel section (19.2) which is remote from the supply line (21) forms a deflection surface for deflecting the collision jet into the collision space (19.1.3).

## Revendications

1. Buse de lavage destinée à être utilisée sur des véhicules pour appliquer un milieu de lavage ou de nettoyage liquide, comprenant au moins un canal de buse (8) dans un corps de buse (2), au moins une ouverture de buse (5) formée par le canal de buse (8) destinée à l'évacuation d'au moins un jet de buse (10, 11), au moins une amenée (9.1) débouchant dans le canal de buse (8) et destinée à amener le milieu de nettoyage, et au moins une portion (7a) dans le canal de buse (8) destinée à générer au moins un jet principal de milieu de nettoyage, et des moyens (9.2) destinés à solliciter le au moins un jet principal avec un jet de collision à l'intérieur du corps de buse (2) dans un espace de collision (4.2) ménagé en amont de l'ouverture de buse (5) par rapport au sens d'écoulement, la région de génération du au moins un jet principal étant prévue en amont de l'espace de collision (4.2) par rapport au sens d'écoulement, la région de génération du jet principal étant formée par au moins un rétrécissement dans le canal de buse de façon à ce que le rétrécissement soit formé par au moins une portion de canal (7a) de section réduite, et la au moins une portion de canal (7a) étant en outre formée au niveau d'une pastille de buse (3) reçue dans le corps de buse (3) ou dans l'évidement (4.1) ménagé à cet endroit, **caractérisée en ce que** la pastille de buse (3) est dotée sur sa surface extérieure d'au moins une gorge de canal (7) formant la portion rétrécie de canal de buse (7a).

2. Buse de lavage selon la revendication 1, **caractérisée en ce que** le canal de buse (1) comporte au moins deux portions de canal (7a) de section réduite.

3. Buse de lavage selon la revendication 2, **caractérisée en ce que** les axes des portions de canal (7a) forment entre eux un angle (α) et débouchent en divergeant dans l'espace de collision (4.2) en partant d'une chambre (6a) reliée à une amenée (9.1).

4. Buse de lavage selon l'une des revendications précédentes, **caractérisée en ce que** les au moins deux portions de canal (7a) de section réduite sont disposées de façon à ce que leurs axes se trouvent dans un plan commun.(plan XZ).

5. Buse de lavage selon la revendication 4, **caractérisée en ce que**, lorsque la buse de lavage (1) est configurée avec une ouverture de buse (5) en forme de fente pour générer un jet de buse (11) plat ou en forme d'éventail, le plan commun (plan XZ) est situé parallèlement au côté le plus long de l'ouverture de buse (5) en forme de fente.

6. Buse de lavage selon l'une des revendications précédentes, **caractérisée en ce que** les moyens de sollicitation du au moins un jet principal avec l'au moins un jet de collision sont formés par au moins une ouverture (9.2.1), débouchant dans l'espace de collision (4.2), d'une deuxième amenée (9.2) destinée au milieu de nettoyage formant le jet de collision.

7. Buse de lavage selon la revendication 6, **caractérisée en ce que** la deuxième amenée (9.2) respectivement son ouverture (9.2.1) est orientée dans une direction axiale perpendiculaire ou quasiment perpendiculaire à l'axe de buse (DA) et/ou au plan commun (plan XZ) des portions de canal (7a) de section réduite.

8. Buse de lavage selon la revendication 6 ou 7, **caractérisée en ce que** la deuxième amenée (9.2) ou son ouverture (9.2.1) est orientée dans une direction axiale perpendiculaire ou quasiment perpendiculaire au plus grand côté de l'ouverture de buse (5).

9. Buse de lavage destinée à être utilisée sur des véhicules pour l'application d'un milieu de lavage ou de nettoyage liquide, ladite buse de lavage comportant au moins un canal de buse (19) dans un corps de buse (15, 15a), au moins une ouverture de buse (20, 20a) formée par le canal de buse et destinée à l'évacuation d'au moins un jet de buse (14), au moins une amenée (21) débouchant dans le canal de buse (19) et destinée à amener le milieu de nettoyage et au moins une portion (19.1.2) dans le canal de buse (19) pour générer au moins un jet principal de milieu de nettoyage, et des moyens (19.2,22) destinés à solliciter le moins un jet principal avec un jet de collision à l'intérieur du corps de bus (15, 15a) dans un espace de collision (19.1.3) ménagé en amont de l'ouverture de buse (20, 20a) par rapport au sens d'écoulement, **caractérisée en ce que** le canal de buse (19) comporte au moins deux portions de canal (19.1, 19.2) parallèles qui sont respectivement en liaison avec une amenée (21) destinée au milieu de nettoyage liquide et dont une portion de canal (19.1) comporte la région (19.1.2) destinée à former le jet principal et dont l'autre portion de canal (19.2) se termine en aval de la région (19.1.2), par rapport au sens d'écoulement, pour former le jet principal et est en liaison à cet endroit avec l'espace de collision (19.1.3).

10. Buse de lavage selon la revendication 9, **caractérisée en ce que** l'autre portion de canal (19.2) est en liaison avec la une portion de canal (19.1) sur toute sa longueur.

11. Buse de lavage selon la revendication 9 ou 10, **caractérisée en ce que** les portions de canal sont reliées à une amenée commune (21).

12. Buse de lavage selon l'une des revendications 9 à 11, **caractérisée en ce que** la première portion de canal (19.1) est constituée, en partant de l'amenée (21), d'une première section (19.1.1) qui est raccordée à cette amenée dans une première direction axiale (axe X) et qui s'étend dans le sens d'écoulement, d'une deuxième section (19.1.2) qui est raccordée à la première et qui se rétrécit puis s'élargit de nouveau dans au moins une deuxième direction axiale (axe Z) perpendiculaire à la première direction axiale (axe X), et d'une troisième section (19.1.3) qui est raccordée à la deuxième, qui s'élargit progressivement dans au moins une direction axiale, formant la section transversale, (axe Z) et qui se termine dans l'ouverture de buse (20, 20a).

13. Buse de lavage selon la revendication 12, **caractérisée en ce que** la première section (19.1.1) et/ou la deuxième section (19.1.2) et/ou la troisième section (19.1.3) présente, dans une troisième direction axiale (axe Y) perpendiculaire à la deuxième direction axiale (axe Z), une dimension constante ou quasiment constante.

14. Buse de lavage selon la revendication 12 ou 13, **caractérisée en ce que** l'autre portion de canal (19.2) possède, dans une deuxième direction axiale (axe Z), une largeur constante ou quasiment constante, par exemple une largeur qui est égale ou sensiblement égale à la largeur de la première section (19.1.1) de la une portion de canal (19.1).

15. Buse de lavage selon l'une des revendications précédentes, **caractérisée en ce que** l'autre portion de canal (19.2) a une section qui est inférieure à la section de la une portion de canal (19.1).

16. Buse de lavage selon l'une des revendications précédentes, **caractérisée en ce que** l'autre portion de canal (19.2) comporte, dans la troisième direction axiale (axe Y), une section transversale qui est inférieure à la section transversale de la une portion de canal (19.1) dans cette troisième direction axiale (axe Y).

17. Buse de lavage selon l'une des revendications précédentes, **caractérisée en ce que** le corps de buse (15) est constitué deux parties, et **en ce que** le canal de buse (19) ou les portions de canal (19.1, 19.2) sont formées par des évidements ou des creux au niveau des faces adjacentes des parties (16, 16a, 18, 18a) du corps de buse (15, 15a).

18. Buse de lavage selon l'une des revendications précédentes, **caractérisée en ce que** l'extrémité (22), distale par rapport à l'amenée (21), de l'autre portion de canal (19.2) forme une surface de déviation destinée à dévier le jet de collision dans l'espace de collision (19.1.3).
